# EUROPÄISCHE PATENTSCHRIFT

(11) **EP 1 010 728 B1**
(45) Veröffentlichungstag und Bekanntmachung des Hinweises auf die Patenterteilung: **14.12.2005**
(21) Anmeldenummer: 99124362.7
(22) Anmeldetag: 07.12.1999
(51) Int. Cl.: C08L 91/08, C08L 91/00, C09G 1/08, C09G 3/00, C08L 91/06

(54) **Wachspräparat enthaltend Partialester von Polyolen und Montanwachssäure und Ca-Seifen der Montanwachssäure**
Wax composition containing a partial ester of polyols and montanwax acid and calcium soaps of montan wax acid
Composition de cire contenant un ester partiel d'un polyol et d'un acide dérivé de cire montan ainsi qu'un savon calcique de cet acide

(30) Priorität: 19.12.1998 DE 19858852
(43) Veröffentlichungstag der Anmeldung: 21.06.2000
(73) Patentinhaber: Clariant GmbH, 65929 Frankfurt am Main (DE)
(72) Erfinder: Heinrichs, Franz-Leo, Dr., 86456 Gablingen (DE); Drechsler, Monika, 86456 Gablingen (DE); Kapfer, Werner, 86154 Augsburg (DE); Henze, Andree, Dr., 86199 Augsburg (DE)

(56) Entgegenhaltungen:
- EP-A- 0 587 104
- GB-A- 765 088
- GB-A- 941 981
- US-A- 3 704 145
- US-A- 4 141 866
- US-A- 4 962 145
- US-A- 5 743 949

## Beschreibung

Die vorliegende Erfindung bezieht sich auf ein Wachspräparat, auf ein Verfahren zur Herstellung und auf seine Verwendung.

Kombinationen aus Ca-Seifen der Montanwachssäure und Estern zweiwertiger Alkohole mit hohem Veresterungsgrad werden schon lange technisch hergestellt und als Wachse zur Herstellung von Lösemittelpasten oder als Gleit- und Trennmittel eingesetzt.

Für Verwendung in Lösemittelpasten werden insbesondere Ester von Ethandiol 1,2 und/oder Butandiol 1,3 mit Veresterungsgraden > 90% eingesetzt. Der Anteil der Ca-Seife in den Mischungen liegt bei ca. 45 Gew.-% entsprechend einem Ca-Gehalt von ca. 1,5 Gew.-%. Solche Produkte sind z.B. die Wachse "Wachs OP®" Wachs O®" der Clariant GmbH oder "Wachs OP®" der BASF.

Hergestellt werden diese Wachse durch fast vollständige Umsetzung der Alkoholkomponente mit einem berechneten Säureüberschuß, der Säureüberschuß wird dann durch Zusatz von Ca(OH)₂ neutralisiert. Da die Verteilung des Ca(OH)₂ immer problematisch ist, wird mit einem Überschuß gearbeitet, der dann durch Filtration oder Zentrifugieren abgetrennt werden muß.
Charakteristisch für diese Produkte ist eine Viskosität (DGF-M-III 8 (75)) von ca. 400 mPas und ein Tropfpunkt (DGF-M-III 3 (75)) von 99-105°C.

Diese Produkte stehen im Wettbewerb zu synthetischen Wachsen und Naturwachsen, wie z.B. Carnaubawachs.

Vor allem Carnauba bietet für die Anwendung in Lösemittelpasten für Schuhpflege den Vorteil, daß es feste, wärmestabile und glänzende Pasten bildet, die gegenüber Anwendungen von reinen Montanwachsderivaten bevorzugt werden.
Nachteilig ist, daß Carnauba nicht in gleichbleibender Menge und Qualität verfügbar ist.

Es bestand daher die Aufgabe, ein Produkt für die Anwendung "Pasten auf Lösemittelbasis" herzustellen, das sich in seinen Eigenschaften gleich oder besser als Carnauba verhält, aber in konstanter Qualität wirtschaftlich hergestellt werden kann.

Es wurde nun überraschend gefunden, daß Partialester von mehrwertigen Alkoholen z.B. Glycerin, Diglycerin, Trimethylolpropan, und Sorbitol, in Kombination mit Ca-Seife der Montanwachssäure, hergestellt nach einem neuen Verfahren, diese Anforderungen erfüllen.

Gegenstand der Erfindung ist somit eine Wachsmischung enthaltend
a) 10-80 Gew.-% Partialester von Glycerin. Diglycerin, Sorbitol oder Trimethylolpropan mit Montanwachssäure;
b) 0 - 30 Gew.-% Partialester von Polyolen mit mehrwertigen Carbonsäuren der Kettenlänge C₄-C₃₈; und
c) 20 - 90 Gew.-% Ca-seifen der Montanwachssäure.

Besonders geeignet sind Wachsmischungen, worin die Anzahl der OH-Gruppen in der Alkoholkomponente > = 2 ist, und worin mehrwertige primäre Alkohole, deren Dimere oder Oligomere und/oder deren Ethoxylierungsprodukte oder mehrwertige Alkohole mit primären und sekundären OH-Gruppen eingesetzt werden.

Als mehrwertige Carbonsäuren werden dabei vorzugsweise zwei- und dreiwertige Carbonsäuren eingesetzt.

Die pastenbildende Wirkung der Produkte kann durch den gezielten Zusatz von Dicarbonsäuren noch unterstützt werden.

Besonders bevorzugt werden beispielsweise Citronensäure, Weinsäure, Äpfelsäure, Itaconsäure, Maleinsäure, Adipinsäure, Sebacinsäure, Dodecandisäure, Dimerfettsäure, Phtalsäure oder Terephtalsäure eingesetzt.

Erreicht wird der gewünschte Effekt dadurch, daß in einer ersten Stufe der Partialester hergestellt wird durch Veresterung der Polyole. Der Veresterungsgrad liegt dabei unter 90%, bevorzugt zwischen 30 und 70%. In den Ester wird dann in einer zweiten Stufe eine basische Ca-Verbindung, vorzugsweise Ca(OH)₂ dispergiert, was ohne Probleme möglich ist. Dann erst wird in der dritten Stufe durch Zugabe von Wachssäure die Seife hergestellt. Der Anteil an Seife kann durch Variation der Ca/Montanwachssäuremenge optimal eingestellt werden. Er variiert zwischen 20 und 70 Gew.-% entsprechend einem Ca-Gehalt von 1 - 3 Gew.-%.

Die Produkte mit einem Ca-Gehalt von 1,6 Gew.-% sind charakterisiert durch eine Viskosität (DGF-M-III 8 (75)) von ca. 300 mPas und einem Tropfpunkt (DGF-M-III 3 (75)) von 105 - 115°C.

Die erfindungsgemäßen Wachsmischungen eignen sich hervorragend zur Herstellung von Lösemittelpasten als Einzelkomponente oder in Kombination mit synthetischen, natürlichen oder halbsynthetischen wachsartigen Produkten als Gleit- und Trennmittel in der Kunststoff- und Metallverarbeitung. Sie sind außerdem sehr gut geeignet zur Herstellung von feinsten Wachspulvern.

### Beispiele für die Herstellung

### Vergleichsbeispiel 1: Wachs OP

| | |
|---|---|
| Wachs S | 100 kg |
| Butylenglykol | 8,5 kg |
| Ca(OH)₂ | 3 kg |
| H₂SO₄ | 30 ml |

Wachs S und Butylenglykol werden zusammen mit der Schwefelsäure bei 110-115°C gerührt. Sobald die Säurezahl des Gemisches auf 50 abgesunken ist, wird die Mischung in den Verseifer gedrückt und mit Ca(OH)₂ versetzt. Es wird solange gerührt, bis die Säurezahl zwischen 12 - 14 liegt.

### Vergleichsbeispiel 2: Wachs O

| | |
|---|---|
| Wachs S | 100 kg |
| Ethylenglykol | 4,9 kg |
| Ca(OH)₂ | 3 kg |
| H₂SO₄ | 30 ml |

Wachs S und Ethylenglykol werden zusammen mit der Schwefelsäure bei 110-115°C gerührt. Sobald die Säurezahl des Gemisches auf 50 abgesunken ist, wird die Mischung in den Verseifer gedrückt und mit Ca(OH)₂ versetzt. Es wird solange gerührt, bis die Säurezahl zwischen 12 - 14 liegt.

### Beispiel 1

### Mischung aus Ca-Seife und Glycerin-Partialester der Montanwachssäure

| | |
|---|---|
| Glycerinester der Montanwachssäure | 600 kg |
| Montanwachssäure | 400 kg |
| Ca(OH)₂ | 30 kg |

Montanwachssäure und Glycerin werden im Molverhältnis 1:2 gemischt und in bekannter Weise bis Säurezahl 20 verestert. Nach Erreichen der Ziel-Säurezahl wird die Reaktion durch Zugabe von Ca(OH)₂ abgebrochen. Die Mischung wird intensiv gerührt, bis die gesamte Menge Ca(OH)₂ fein verteilt ist. In diese Mischung wird vorsichtig die für die Seifenherstellung berechnete Menge an Montanwachssäure eindosiert. Die Dosiergeschwindigkeit wird so eingestellt, daß ein Überschäumen vermieden wird. Der Ansatz wird gerührt bis die Säurezal bei 20-30 liegt, dann wird konfektioniert.

### Beispiel 2

### Mischung aus Ca-Seife und Diglycerin-Partialester der Montanwachssäure

| | |
|---|---|
| Diglycerinester der Montanwachssäure | 600 kg |
| Montanwachssäure | 400 kg |
| Ca(OH)₂ | 30 kg |

Montanwachssäure und Diglycerin werden im Molverhältnis 1:2 gemischt und in bekannter Weise bis Säurezahl 20 verestert. Nach Erreichen der Ziel-Säurezahl wird die Reaktion durch Zugabe von Ca(OH)₂ abgebrochen. Die Mischung wird intensiv gerührt, bis die gesamte Menge Ca(OH)₂ fein verteilt ist. In diese Mischung wird vorsichtig die für die Seifenherstellung berechnete Menge an Montanwachssäure eindosiert. Die Dosiergeschwindigkeit wird so eingestellt, daß ein Überschäumen vermieden wird. Der Ansatz wird gerührt bis die Säurezahl bei 20-30 liegt, dann wird konfektioniert.

### Beispiel 3

### Mischung aus Ca-Seife und Sorbitol-Partialester der Montanwachssäure

| | |
|---|---|
| Sorbitolester der Montanwachssäure | 600 kg |
| Montanwachssäure | 400 kg |
| Ca(OH)₂ | 30 kg |

Montanwachssäure und Sorbitol werden im Molverhältnis 1:2 gemischt und in bekannter Weise bis Säurezahl 20 verestert. Nach Erreichen der Ziel-Säurezahl wird die Reaktion durch Zugabe von Ca(OH)₂ abgebrochen. Die Mischung wird intensiv gerührt, bis die gesamte Menge Ca(OH)₂ fein verteilt ist. In diese Mischung wird vorsichtig die für die Seifenherstellung berechnete Menge an Montanwachssäure eindosiert. Die Dosiergeschwindigkeit wird so eingestellt, daß ein Überschäumen vermieden wird. Der Ansatz wird gerührt bis die Säurezahl bei 20-30 liegt, dann wird konfektioniert.

### Beispiel 4

### Mischung aus Ca-Seife und Trimethylolpropan-Partialester der Montanwachssäure

| | |
|---|---|
| Trimethylolpropanester der Montanwachssäure | 600 kg |
| Montanwachssäure | 400 kg |
| Ca(OH)₂ | 30 kg |

Montanwachssäure und Trimethylolpropan werden im Molverhältnis 1:2 gemischt und in bekannter Weise bis Säurezahl 10 verestert, in die Reaktionsmischung werden noch 0,2 mol Sebacinsäure zugesetzt und die Mischung wird weiter gerührt, bis eine Säurezahl von ca. 20 erreicht ist. Nach Erreichen der Ziel-Säurezahl wird die Reaktion durch Zugabe von Ca(OH)₂ abgebrochen. Die Mischung wird intensiv gerührt, bis die gesamte Menge Ca(OH)₂ fein verteilt ist. In diese Mischung wird vorsichtig die für die Seifenherstellung berechnete Menge an Montanwachssäure eindosiert. Die Dosiergeschwindigkeit wird so eingestellt, daß ein Überschäumen vermieden wird. Der Ansatz wird gerührt bis die Säurezahl bei 20-30 liegt, dann wird konfektioniert.

Anwendungsprüfung in Lösemittelpasten:

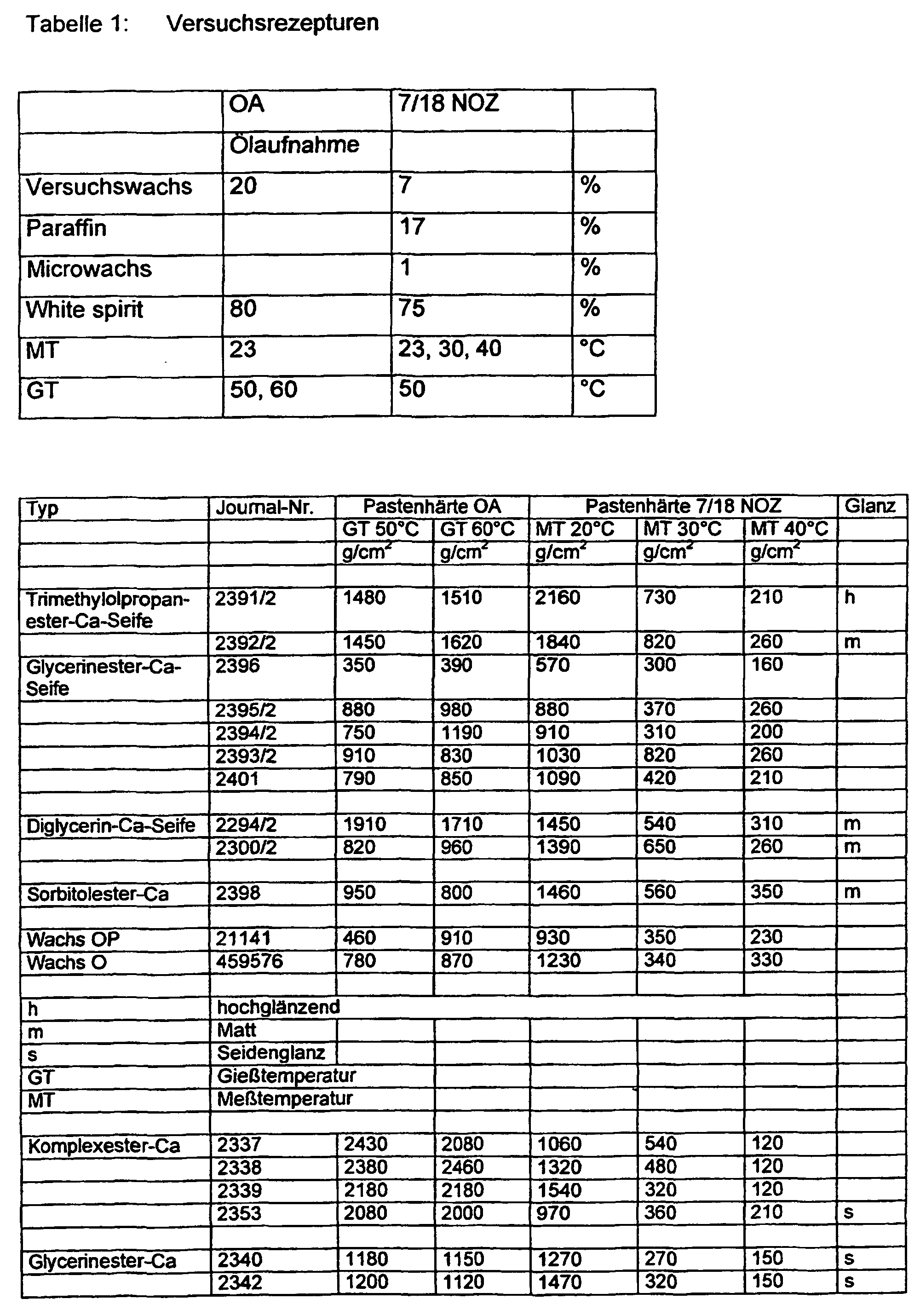

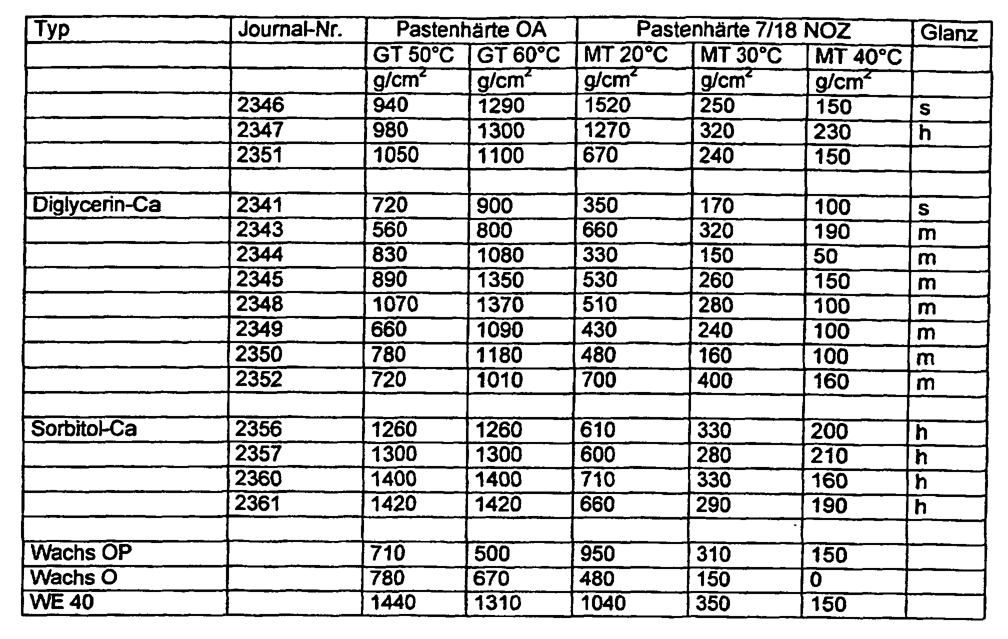

## Patentansprüche

1. Wachsmischung enthaltend
a) 10 - 80 Gew.-% Partialester von Glycerin, Diglycerin, Sorbitol oder Trimethylolpropan mit Montanwachssäure;
b) 0 - 30 Gew.-% Partialester von Polyolen mit mehrwertigen Carbonsäuren der Kettenlänge C₄-C₃₆; und
c) 20 - 90 Gew.-% Ca-seifen der Montanwachssäure.

2. Wachsmischung gemäß Anspruch 1, **dadurch gekennzeichnet, daß** die Anzahl der OH-Gruppen in der Alkoholkomponente > = 2 ist, mehrwertige primäre Alkohole, deren Dimere oder Oligomere und/oder deren Ethoxylierungsprodukte oder mehrwertige Alkohole mit primären und sekundären OH-Gruppen eingesetzt werden.

3. Wachsmischung gemäß Anspruch 1, **dadurch gekennzeichnet, daß** der Veresterungsgrad unter 90% ist.

4. Wachsmischung gemäß Anspruch 1, **dadurch gekennzeichnet, daß** der Veresterungsgrad zwischen 30 und 70% liegt.

5. Wachsmischung gemäß Anspruch 1, **dadurch gekennzeichnet, daß** als mehrwertige Carbonsäure dreiwertige und zweiwertige Carbonsäuren eingesetzt werden.

6. Wachsmischung gemäß Anspruch 1, **dadurch gekennzeichnet, daß** Citronensäure, Weinsäure, Äpfelsäure, Itaconsäure, Maleinsäure, Adipinsäure. Sebacinsäure, Dodecandisäure, Dimerfettsäure, Phthalsäure oder Terephthalsäure eingesetzt werden.

7. Verfahren zur Herstellung der Wachsmischung gemäß den Ansprüchen 1 bis 6, **dadurch gekennzeichnet, daß**
a) in der ersten Stufe der Partialester hergestellt wird,
b) in der zweiten Stufe die erforderliche Menge Ca-Verbindung zugesetzt wird,
c) in der dritten Stufe die Wachssäure zugegeben wird und die Seife hergestellt wird.

8. Verwendung einer Wachsmischung gemäß den Ansprüchen 1 bis 6 zur Herstellung von Lösemittelpasten als Einzelkomponente oder in Kombination mit synthetischen, natürlichen oder halbsynthetischen wachsartigen Produkten.

9. Verwendung einer Wachsmischung gemäß den Ansprüchen 1 bis 6 als Gleit- und Trennmittel in der Kunststoff- oder Metallverarbeitung.

10. Verwendung einer Wachsmischung gemäß den Ansprüchen 1 bis 6 zur Herstellung von feinsten Wachspulvern.

## Claims

1. A wax mixture comprising
a) 10 - 80% by weight of partial esters of glycerol, diglycerol, sorbitol or trimethylolpropane with montan wax acid;
b) 0 - 30% by weight of partial esters of polyols with polybasic carboxylic acids having a chain length of C₄-C₃₆; and
c) 20 - 90% by weight of Ca soaps of montan wax acid.

2. A wax mixture as claimed in claim 1, wherein the proportion of OH groups in the alcohol component is ≥ 2, and polyhydric primary alcohols, their dimers or oligomers and/or their ethoxylation products or polyhydric alcohols containing primary and secondary OH groups are employed.

3. A wax mixture as claimed in claim 1, wherein the degree of esterification is less than 90%.

4. A wax mixture as claimed in claim 1, wherein the degree of esterification is between 30 and 70%.

5. A wax mixture as claimed in claim 1, wherein the polybasic carboxylic acid employed is a tribasic or dibasic carboxylic acid.

6. A wax mixture as claimed in claim 1, wherein citric acid, tartaric acid, malic acid, itaconic acid, maleic acid, adipic acid, sebacic acid, dodecanedioic acid, dimeric fatty acid, phthalic acid or terephthalic acid is employed.

7. A process for the preparation of a wax mixture as claimed in claims 1 to 6, which comprises
a) in the first step, preparing the partial ester,
b) in the second step, adding the requisite amount of Ca compound,
c) in the third step, adding the wax acid and preparing the soap.

8. The use of a wax mixture as claimed in claims 1 to 6 for the preparation of solvent pastes as a single component or in combination with synthetic, natural or semi-synthetic wax-like products.

9. The use of a wax mixture as claimed in claims 1 to 6 as a lubricant or release agent in plastic or metal processing.

10. The use of a wax mixture as claimed in claims 1 to 6 for the preparation of microfine wax powders.

## Revendications

1. Mélange de cire contenant
a) 10% à 80% d'ester partiel de glycérine, de diglycérine, de sorbitol ou de triméthylolpropane avec de l'acide de cire de lignite ;
b) 0% à 30% d'ester partiel de polyols avec des acides polycarboxyliques ayant une longueur de chaîne en C₄ à C₃₅ ; et
c) 20% à 90% de savons calciques de l'acide de cire de lignite.

2. Mélange de cire selon la revendication 1, **caractérisé en ce que** le nombre de groupes OH dans le composant alcool est supérieur ou égal à 2, **en ce que** l'on met en oeuvre des polyols primaires, leurs dimères ou oligomères et/ou leurs produits d'éthoxylation ou des polyols contenant des groupes OH primaires ou secondaires.

3. Mélange de cire selon la revendication 1, **caractérisé en ce que** le degré d'estérification est inférieur à 90%.

4. Mélange de cire selon la revendication 1, **caractérisé en ce que** le degré d'estérification est compris entre 30% et 70%.

5. Mélange de cire selon la revendication 1, **caractérisé en ce que** l'on met en oeuvre, en tant qu'acide polycarboxylique, des acides tricarboxyliques et dicarboxyliques.

6. Mélange de cire selon la revendication 1, **caractérisé en ce que** l'on met en oeuvre l'acide citrique, l'acide tartrique, l'acide malique, l'acide itaconique, l'acide maléique, l'acide adipique, l'acide sébacique, l'acide dodécanedioïque, l'acide dimère, l'acide phtalique ou l'acide téréphtalique.

7. Procédé de préparation du mélange de cire selon les revendications 1 à 6, **caractérisé en ce que**
a) dans la première étape, on prépare l'ester partiel,
b) dans la deuxième étape, on ajoute la quantité nécessaire du composé calcique,
c) dans la troisième étape, on ajoute l'acide de cire et on prépare le savon.

8. Utilisation d'un mélange de cire selon les revendications 1 à 6 pour la préparation de pâtes à base de solvant en tant que composant unique ou en combinaison avec des produits cireux synthétiques, naturels ou semi-synthétiques.

9. Utilisation d'un mélange de cire selon les revendications 1 à 6 en tant que lubrifiant et agent de démoulage dans le domaine de la plasturgie et de la métallurgie.

10. Utilisation d'un mélange de cire selon les revendications 1 à 6 pour la préparation de poudres de cires extrêmement fines.
